Europäisches Patentamt

European Patent Office

Office européen des brevets

(11) Publication number: **0 021 629**
**B1**

# EUROPEAN PATENT SPECIFICATION

(45) Date of publication of patent specification: **16.01.85**

(21) Application number: **80301818.3**

(22) Date of filing: **02.06.80**

(51) Int. Cl.⁴: **A 23 B 7/06**, A 23 L 3/00

(54) **Method of processing mushrooms.**

(30) Priority: **06.06.79 US 46078**

(43) Date of publication of application:
**07.01.81 Bulletin 81/01**

(45) Publication of the grant of the patent:
**16.01.85 Bulletin 85/03**

(84) Designated Contracting States:
**AT BE DE FR GB IT NL**

(56) References cited:
FR-A-2 227 833
GB-A-1 441 072
LU-A- 71 446
US-A-2 525 581
US-A-2 728 676
US-A-3 476 078

"Advances in Food Research" Vol. 12 Ed. C.
Chichester et al. p. 290-295 (1963 New York)

The file contains technical information
submitted after the application was filed and
not included in this specification

(73) Proprietor: **Ferguson, Andrew M.**
**5337 Taney Avenue**
**Alexandria Virginia 22304 (US)**
(73) Proprietor: **Malick, Howard M.**
**108 Delaware Avenue**
**West Chester Pennsylvania 19380 (US)**

(72) Inventor: **Ferguson, Andrew M.**
**5337 Taney Avenue**
**Alexandria Virginia 22304 (US)**
Inventor: **Malick, Howard M.**
**108 Delaware Avenue**
**West Chester Pennsylvania 19380 (US)**

(74) Representative: **Coxon, Philip et al**
**Eric Potter & Clarkson 14 Oxford Street**
**Nottingham NG1 5BP (GB)**

Courier Press, Leamington Spa, England.

## Description

This invention relates to a method of processing mushrooms.

Mushrooms commonly lose approximately 25% to 30% or more of their fresh weight when subject to the blanching process prior to canning. The blanching process is designed to inactivate certain enzymes and partially sterilize the mushrooms and involves either steam or boiling water cooking for approximately five minutes to bring the internal temperature to 180°F (82°C) or above.

Sterilization after canning normally results in an additional 10% to 15% weight loss. Sterilization is normally accomplished in a pressure vessel and involves bringing the temperature at the middle of the sealed can to 250°F (121°C) and holding this temperature a sufficient time to destroy thermophylic organisms which may be present and complete the sterilization.

The combination of these two processes results in an expected weight loss during canning of mushrooms of 35% to over 40%.

This extreme weight loss sets mushrooms apart from other vegetables as does the fact that they are a macro fungi rather than a chlorophyl producing plant.

The weight loss that is experienced in the canning process makes the canned product more expensive than fresh mushrooms. The canned mushroom, upon further cooking such as sauteing, still experiences a further weight loss.

Several processes have been proposed for reducing the weight loss experienced during canning mushrooms. U.S. Patent 3,843,810 proposes applying a vacuum down to lower than 13 mm of mercury in a slow, controlled descent followed by at least one hour at a minimum pressure than a slow increase in pressure to ambient, while soaking the mushrooms in a water solution. The process takes a minimum of two hours in the vacuum and preferably three hours. The average yield after blanching given by Fehmerling with a three hour process is given as 84%. Additionally, Fehmerling shows a series of comparisons between his process and other vacuum processes.

U.S. Patent 4,143,167 discloses a process using a vacuum down to approximately 50 mm to 60 mm of mercury in a soak which is 1% to 6% dried egg albumin or equivalent. This treatment does succeed in reducing the weight loss, however, the resulting product has objectional coagulated albumin hanging from it and the texture is noticeably tough and rubbery.

Mushrooms, after harvest, are normally commercially stored at approximately 32°F (0°C) to retard further respiration which would result in opening of the veil which makes them less desirable, and to reduce the weight loss during storage since mushrooms continue to respire after harvest.

It is known to commercial canners and shown in the experiments of McArdle et al in 1962 that there is a relationship between the length of post harvest storage and the amount of weight loss experienced during canning. This small reduction in the weight loss is offset by the weight loss in storage due to respiration of the mushroom along with deterioration of colour and blemishing and the increased number of "opens" or lower grade mushrooms from extended storage. Even the slight reduction in weight loss prompts most mushrooms canneries to store fresh mushrooms at about 32°F (0°C) for two to three days prior to canning.

US—A—2,278,676 describes a method of maintaining firmness and natural colour in processed fruit and vegetable products, particularly apples. The process involves treating the foodstuff with an aqueous solution containing a carboxyalkyl cellulose derivative, and also involves applying a vacuum to the foodstuff; this treatment is carried out at blanching temperatures. A small amount of the cellulose derivative may be absorbed by the foodstuff, usually less than 0.005% by weight based upon the original weight of the foodstuff.

According to the present invention, there is provided a method for processing mushrooms comprising the steps of introducing the mushrooms into a liquid filled sealable container; subjecting the contents of the container to at least one application of positive or negative pressure; restoring the pressure and removing the mushrooms from the container, wherein the liquid includes a particulate colloidal suspension and the pressure and release cycle is sufficient to cause the infusion of a portion of the liquid and particulates into the mushrooms.

The present invention provides a rapid, economical procedure for substantially reducing the weight loss presently experienced in canning mushrooms. This is brought about by use of the rapid positive or negative pressure assisted impregnation into the mushroom of the particulate colloidal suspension. This rapid infusion can raise the weight of the mushrooms by up to 50% or more. Subsequent blanching causes weight loss in the treated mushrooms back to approximately their fresh weight. Canning and retorting of these treated, blanched mushrooms causes an additional weight loss but the total weight loss is reduced to approximately 10% to 15% of the original fresh weight as opposed to 33% to 40% weight loss which is experienced by conventional processing methods.

The resulting mushrooms, in addition to the reduction in weight loss, have a texture both before and after subsequent cooking which is markedly superior to presently available canned mushrooms and is often judged better than fresh mushrooms that have been similarly cooked by common methods such as sauteing or in a tomato sauce.

A variety of materials are suitable for infusion into the mushroom, however, microcrystalline cellulose as described in U.S. Patent 3,023,104 has been found to be superior to other materials tested to this time.

Microcrystalline cellulose is a minute particulate aggregate widely used in the food industry as a bulking agent in dietary foods and as a thickening and stabilizing agent in sauces, etc.

The particular material which has been most successful in tests has been a combination of microcrystalline cellulose codried with CMC (Sodium Carboxymethyl Cellulose) an example of which is currently marketed by FMC Corporation under the designation Avicel type CL-611.

Other protective hydrocolloids such as cellulose gums, gel formers and similar materials as described in U.S. Patent 3,573,058 may be expected to also be effective to greater or lesser degrees.

This material is used in all tests herein described in order to clearly illustrate the invention in a preferred embodiment.

The following examples are presented to illustrate the particulars of the present invention and alternative methods for the accomplishment of the desired ends.

During the course of the tests, mushrooms from various growers were randomly selected. The mushroom used for the tests were less than 24 hours post harvest, unless otherwise noted, and had been stored in commercial facilities at a temperature of approximately 32°F (0°C) and high relative humidity. Weight changes during the tests are expressed as percentages of the beginning weights of the samples to provide ready comparison. The percentages in all cases are averages obtained from multiple repititions of the tests.

All tests were performed in the following manner unless otherwise noted.

Samples were drawn from standard 10lb (4.5 kg) boxes as delivered to the processor by the grower. Weights were recorded using a laboratory scale. Samples were all washed by tumbling in fresh water for three minutes, closely approximating the initial processing in commercial operations.

Samples were then drained for three minutes on a slanted screen and weighed again.

The selected treatment method was performed and the sample was again drained and weighed.

The sample was plunged into boiling water for five minutes then cooled in water for three minutes to approximately 80°F (27°C) internal temperature. The sample was again drained and weighed.

Sample No. 1 is a control and no processing was used other than washing and blanching.

Sample No. 2 was submerged in water and subjected to a vacuum of approximately 29.5 inches of mercury (1.7 kPa) for five minutes.

The vacuum was released for one minute, reapplied for five minutes, and released again.

Sample No. 3 was treated the same as No. 2 except a 2% by weight solution of Carrageenan (an algin derivative non heat stable gel) in water was used.

Sample No. 4 was submerged in a 4% by weight suspension of Avicel type CL611 and subjected to an over-pressure of 10 psig (170 kPa) for 30 seconds. The pressure was rapidly released, left off for 10 seconds and applied a second time for 30 seconds, rapidly released, left off for 10 seconds, reapplied for 30 seconds and again released.

Sample No. 5 was treated the same as number 4, except a pressure of 15 psig (205 kPa) was used.

Sample No. 6 was treated the same as No. 4 except a pressure of 20 psig (239 kPa) was used.

Sample No. 7 was treated the same as No. 4 except a pressure of 25 psig (274 kPa) was used.

Sample No. 8 was treated the same as No. 4 except a pressure of 30 psig (308 kPa) was used.

Sample No. 9 was treated the same as No. 4 except a pressure of 80 psig (653 kPa) was used.

Sample No. 10 was submerged in a 4% by weight suspension of Avicel type CL-611 in water, subjected to a vacuum of approximately 29.5 inches of mercury (1.7 kPa) for five minutes. The vacuum was released and the mushrooms were allowed to stand in the suspension for one minute.

Sample No. 11 was submerged in a 4% by weight suspension of Avicel type CL-611 in water and subjected to a vacuum of approximately 29.5 inches of mercury (1.7 kPa) for five minutes. The vacuum was released for one minute and reapplied for five minutes. The vacuum was again released and the mushrooms allowed to stand in the suspension for one minute.

Sample No. 12 was treated the same as sample No. 11 except a solution of 2% Sodium Carboxymethyl Cellulose was used.

Sample No. 13 was treated the same as sample No. 11 except a suspension of 4% microcrystalline cellulose alone was used.

The results of the various comparative tests are summarized in Table 1.

It is evident from the tests performed that infusing a particulate heat stable gel material such as microcrystalline cellulose codried with a protective hydrocolloid as found in Avicel type CL-611 produced a remarkable reduction in the weight loss experienced. The combination of microcrystalline cellulose codried with the protective hydrocolloid seems to have almost a synergistic effect on the weight loss reduction.

The infusion of water or a non heat stable gel such as carrageenan has little effect on the shrinkage experienced when using a similar process.

The infusion of microcrystalline cellulose by itself as in sample No. 13 produced results that are as good as any previously shown in patent literature.

The infusion of Sodium Carboxymethyl Cellulose as in sample No. 12 produced some reduction in weight loss and these results may be expected to be repeatable to a greater or less degree with other hydrocolloids or gums.

It is seen that producing the infusion by means of drawing and releasing a vacuum is a superior method of utilizing pressure to produce the infusion. It is particularly interesting to note, however, that a moderate pressure of from 15 psig (205 kPa) to 30 psig (308 kPa) followed by rapid release of the pressure and preferably repeating the pressure and release two or three times does produce an infusion into the mushroom to a degree sufficient to sizeably reduce the shrinkage during blanching. The use of pressure to produce an infusion in mushrooms is a completely new approach in mushroom processing. Mushrooms are a porous, resilient plant product that are considered to be very delicate and are particularly susceptable to bruising. For this reason, transport of mushrooms during processing is generally done by water flume rather than by conveyors or other means to reduce the bruising and the resulting lowering of the quality of the product. The use of overpressure and rapid release to produce the infusion in the mushrooms resulted in no detectable bruising or damage to the mushrooms whatsoever as could be determined from careful examination. The rapid accomplishment of an infusion by means of pressure rather than vacuum is an unexpected and valuable discovery.

In many cases a moderate overpressure of between 15 psig (205 kPa) and 30 psig (308 kPa) is much easier to accomplish than drawing a considerable vacuum in commercial size applications. It has also been discovered that overpressure above approximately 30 psig (308 kPa) to 35 psig (343 kPa) has little or no added benefit as illustrated by sample No. 9 wherein 80 psig (653 kPa) overpressure was used with no significant difference in the weight of the mushrooms after treatment or after blanch when compared to the results obtained with pressures of 15 psig (205 kPa) and 30 psig (308 kPa).

It has further been found that drawing and releasing a vacuum twice produces a significant difference in the weight of the mushrooms and the completeness of the infusion over drawing a vacuum and releasing it once. This difference was observed even when the single vacuum application was continued for double and triple the durations given in the specific examples given.

It has been observed during the tests that after a single vacuum application and release approximately 20% of the mushrooms remain floating in the suspension. After drawing and releasing the vacuum the second time virtually 100% of the mushrooms sank to the bottom of the suspension indicating virtually complete saturation.

Tests were also made combining the use of single and multiple low overpressure applications either before or after a single vacuum application. The results of these tests were similar to those given for samples 5 through 10 with the majority giving results close to those of sample 10.

Mushrooms treated by the process of example No. 11 were further processed by actual canning and sterilization in commercial equipment along with control samples from the same lots of mushrooms which were conventionally processed. Beginning weights, weights after blanching, and weights of blanched mushrooms placed in each can prior to sterilization were recorded. After the cans were sealed, commercial process sterilization equipment was used to bring the temperature at the center of the cans to 250°F (121°C) and hold this temperature a sufficient time to fully sterilize the contents.

Sample cans of the treated and control mushrooms were opened, drained and weighed after one day storage and one week storage. The conventionally processed mushrooms experienced a total shrinkage of between 32% and 37% of their fresh weight. The mushrooms processed according to the procedure in example No. 11 experienced a total shrinkage of between 11% and 14% of their fresh weight.

Blind taste and appearance comparative tests were conducted using subjects involved in the mushroom industry, either as growers or in processing or marketing. Samples of canned mushrooms processed conventionally and by the process of example 11 were served as they came from the can, cooked by sauteing, and cooked in a commercially available tomato sauce for spaghetti.

The mushrooms prepared by the process of example 11 were chosen unanimously for better colour and appearance. There was no discernable difference expressed as regards taste. Surprisingly, the mushrooms prepared by the process of example 11 were unanimously remarked upon as being superior in texture, retaining a fresh uniform tender texture throughout while the conventionally processed mushrooms had a characteristic toughness of skin after being sauted and especially after cooking in the tomato sauce.

Additional tests were conducted with mushrooms processed according to the procedures of example 11 and frozen.

Frozen mushrooms are used commercially by restaurants and in ready to cook frozen foods such as pizzas.

Fresh frozen mushrooms, when cooked, lose a considerable amount of water weight. This is particularly objectional in items such as frozen pizza's wherein the mushrooms often form a puddle of almost boiling water with noticeable shrinking. Weight loss from cooking fresh frozen mushrooms averages from 40% to 50% of the fresh weight. Weight loss from cooking mushrooms treated and blanched according to the process of example 11 and then frozen averaged between 14% and 22% of their beginning fresh weight. This remarkable reduction in weight loss was accompanied by an equal reduction in the puddling and visably noticeable shrinkage experienced. Additionally, the texture of the frozen mushrooms processed according to the present invention was tender and succulant as opposed to the noticeable toughening of the conventionally frozen mushrooms.

Mushrooms prepared according to the process of example 11 but not blanched were frozen. Upon subsequent cooking the percentage of weight loss from the infused weight was between 40% and 50% or generally comparable to the shrinkage of fresh frozen mushrooms. However, the yield from one pound of fresh mushrooms is considerably greater, when treated according to the present invention and then frozen, than if just fresh frozen as is illustrated in table 2.

As can be seen in Table 2, equal batches of mushrooms were conventionally fresh frozen and processed the same as sample No. 11 and frozen without being blanched. When later cooked, the fresh frozen mushrooms yielded a cooked weight of 50% to 60% of their fresh weight. The sample that was infused as in sample No. 11 and frozen without blanching yielded a cooked weight of 75% to 90% of their fresh weight.

It is readily appreciated that the information presented by this invention can be of considerable value to the mushroom processing industry.

Mushrooms may now be processed by either a rapid vacuum or a low order pressure infusion to reduce weight loss substantially.

Frozen mushrooms may be processed according to this invention to reduce shrinkage and puddling upon subsequent cooking.

Both frozen and canned mushrooms may now be produced having a more desirable and tender texture than previously available.

Table 1*

| Sample | Start | After wash | After treatment | After blanch & cool | |
|---|---|---|---|---|---|
| 1 | 100 | 113 | — | 74 | Control |
| 2 | 100 | 112 | 155 | 75 | Water & Vacuum |
| 3 | 100 | 112 | 156 | 77 | Carrageenan & Vacuum |
| 4 | 100 | 112 | 145 | 86 | 3×10 psig (170 kPa) |
| 5 | 100 | 113 | 148 | 90 | 3×15 psig (205 kPa) |
| 6 | 100 | 112 | 147 | 91 | 3×20 psig (239 kPa) |
| 7 | 100 | 113 | 148 | 90 | 3×25 psig (274 kPa) |
| 8 | 100 | 112 | 146 | 88 | 3×30 psig (308 kPa) |
| 9 | 100 | 111 | 145 | 89 | 3×80 psig (653 kPa) |
| 10 | 100 | 112 | 152 | 100 | Vacuum 1 times |
| 11 | 100 | 113 | 160 | 105 | Vacuum 2 times |
| 12 | 100 | 112 | 153 | 82 | Vacuum 2 times CMC |
| 13 | 100 | 112 | 154 | 90 | Vacuum 2 times Microcrystalline Cellulose |

*(Weights expressed as percentage of fresh weight)

Table 2**

| | Start | After processing | Frozen wt | Cooked wt |
|---|---|---|---|---|
| Processed by example #11 | 100 | 150 | 150 | 75 to 90 |
| Normal commercial processing | 100 | 110 | 110 | 50 to 60 |

**(weights expressed as percentage of fresh weight)

## Claims

1. A method for processing mushrooms comprising the steps of introducing the mushrooms into a liquid filled sealable container; subjecting the contents of the container to at least one application of positive or negative pressure; restoring the pressure and removing the mushrooms from the container, wherein the liquid includes a particulate colloidal suspension and the pressure and release cycle is sufficient to cause the infusion of a portion of the liquid and particulates into the mushrooms.

2. A method according to Claim 1 in which the or each application of pressure is negative pressure, preferably of at least 29 inches of mercury (3.4 kPa), or the or each application of pressure is positive pressure, preferably of at least 10 psig (170 kPa).

3. A method according to Claim 1 in which both positive and negative pressures are applied, preferably of at least 10 psig (170 kPa) and at least 29 inches of mercury (3.4 kPa) respectively.

4. A method according to any of Claims 1 to 3 in which the pressure is restored to atmospheric between applications of pressure.

5. A method according to any of Claims 1 to 4 comprising the step of freezing the mushrooms after removal from the container.

6. A method according to Claim 5 in which the mushrooms are subjected to an elevated temperature prior to freezing and, preferably, are immersed in water prior to and/or during the application of an elevated temperature.

7. A method according to Claims 1 to 4 wherein the mushrooms are subjected to a temperature of at least 180°F (82°C), for purposes of cooking, after infusion with the liquid and particulate suspension.

8. A method according to Claim 7 wherein, the liquid contains microcrystalline cellulose, preferably together with a protective hydrocolloid such as Sodium Carboxymethyl Cellulose.

9. A mushroom product obtainable by the process of Claim 1.

## Revendications

1. Procédé de traitement des champignons comportant les étapes d'introduire les champignons dans un récipient scellable rempli d'une liquide; de soumettre le contenu de récipient à au moins une application de pression positive ou négative; de rétablir la pression et sortir les champignons du récipient, dans lequel le liquide comporte une suspension colloïdale de particules et le cycle de pression et de relâchement est suffisant pour provoquer l'infusion d'une partie du liquide et des particules dans les champignons.

2. Procédé selon la revendication 1 dans lequel la ou chaque application de pression est une pression négative, de préférence au moins 29 pouces de mercure (3,4 kPa), ou la ou chaque application de pression est une pression positive, de préférence d'au moins 10 psig (170 kPa).

3. Procédé selon la revendication 1 dans lequel à la fois des pressions positive et négative sont appliquées de préférence d'au moins 10 psig (170 kPa) et d'au moins 20 pouces de mercure (3,4 kPa) respectivement.

4. Procédé selon l'une des revendications 1 à 3 dans lequel la pression est rétablie à la pression atmosphérique entre des applications de pression.

5. Procédé selon l'une des revendications 1 à 4 comportant l'étape de congélation des champignons après la sortie du récipient.

6. Procédé selon la revendication 5 dans lequel les champignons sont soumis à une température élevée avant la congélation et, de préférence, sont immergés dans l'eau avant et/ou pendant l'application d'une température élevée.

7. Procédé selon les revendications 1 à 4 dans lequel les champignons sont soumis à une température d'au moins 180°F (82°C), en vue de la cuisson, après infusion avec le liquide et la suspension de particules.

8. Procédé selon la revendication 7 dans lequel le liquide contient de la cellulose microcristalline, de préférence associée avec un hydrocolloïde protecteur tel que la carboxyméthyl cellulose de sodium.

9. Champignon obtenu par le procédé de la revendication 1.

## Patentansprüche

1. Verfahren zum Verarbeiten von Pilzen, bei welchem die Pilze in einen verschließbaren, mit Flüssigkeit gefüllten Behälter gegeben werden und der Inhalt des Behälters mindestens einmal einem positiven oder negativen Druck ausgesetzt wird und der alte Druck wieder hergestellt wird und die Pilze wieder aus dem Behälter entfernt werden, dadurch gekennzeichnet, daß die Flüssigkeit eine Suspension kolloidaler Teilchen enthält und der Druck- und Entlastungszyklus so bemessen ist, daß ein Teil der Flüssigkeit mit den Teilchen in die Pilze eindringt.

2. Verfahren nach Anspruch 1, dadurch gekennzeichnet, daß bei der oder jeder Druckanwendung der Druck negativ ist und vorzugsweise mindestens 29 Zoll Quecksilbersäule (3,4 kPa) beträgt oder daß bei der oder jeder Druckanwendung der Druck positiv ist und vorzugsweise mindestens 10 psig (170 kPa) beträgt.

3. Verfahren nach Anspruch 1, dadurch gekennzeichnet, daß sowohl en positiver als auch ein negativer Druck angewendet wird, vorzugsweise mindestens 10 psig (170 kPa) bzw. mindestens 29 Zoll Quecksilbersäule (3,4 kPa).

4. Verfahren nach Anspruch 1 bis 3, dadurch gekennzeichnet, daß zwischen den Druckanwendungen der Atmosphärendruck wiederhergestellt wird.

5. Verfahren nach Anspruch 1 bis 4, dadurch gekennzeichnet, daß die Pilze nach dem Entfernen aus dem Behälter eingefroren werden.

6. Verfahren nach Anspruch 5, dadurch gekennzeichnet, daß die Pilze vor dem Einfrieren einer erhöhten Temperatur ausgesetzt werden und vorzugsweise vor und/oder während der Temperaturanwendung in Wasser getaucht sind.

7. Verfahren nach Anspruch 1 bis 4, dadurch gekennzeichnet, daß die Pilze nach dem Eindringen der Flüssigkeit mit den Teilchen zum Kochen einer Temperatur von mindestens 180°F (82°C) ausgesetzt werden.

8. Verfahren nach Anspruch 7, dadurch gekennzeichnet, daß die Flüssigkeit mikrokristalline Cellulose, vorzugsweise ein schützendes Hydrokolloid, wie Natriumzelluloseglykolat, enthält.

9. Ein Pilzprodukt, welches durch Anwendung des Verfahrens gemäß Anspruch 1 erreicht wird.